Europäisches Patentamt

European Patent Office

Office européen des brevets

(11) Publication number: **0 248 616**

**A2**

(12) **EUROPEAN PATENT APPLICATION**

(21) Application number: **87304815.1**

(22) Date of filing: **01.06.87**

(51) Int. Cl.³: **H 04 N 1/40**

(30) Priority: **02.06.86 JP 127617/86**
**22.12.86 JP 303672/86**

(43) Date of publication of application:
**09.12.87 Bulletin 87/50**

(84) Designated Contracting States:
**DE FR GB**

(71) Applicant: **Kabushiki Kaisha Toshiba**
**72, Horikawa-cho Saiwai-ku**
**Kawasaki-shi Kanagawa-ken 210(JP)**

(72) Inventor: **Yamada, Kiyoshi**
**Pat. Division Toshiba Corporation Principal Office**
**1-1, Shibaura 1-ch, Minato-Ku, Tokio(JP)**

(72) Inventor: **Hirahara, Shuzo**
**Pat. Division Toshiba Corporation Principal Office**
**1-1, Shibaura 1-ch, Minato-Ku, Tokyo(JP)**

(72) Inventor: **Matsui, Toshikazu**
**Pat. Division Toshiba Corporation Principal Office**
**1-1, Shibaura 1-ch, Minato-Ku, Tokyo(JP)**

(72) Inventor: **Higuchi, Kazuhiko**
**Pat. Division Toshiba Corporation Principal Office**
**1-1, Shibaura 1-ch, Minato-Ku, Tokyo(JP)**

(74) Representative: **Kirk, Geoffrey Thomas**
**BATCHELLOR, KIRK & EYLES 2 Pear Tree Court**
**Farringdon Road**
**London EC1R 0DS(GB)**

(54) **Picture printing apparatus.**

(57) A picture printing apparatus includes a picture type judgement means, and a best mode printing system is determined according to the judging result. A mixed mode picture including a binary picture element and a gradational picture element is printed to utilize selectively the binary method, multivalence concentration pattern method and the dither method.

Fig. 5

0248616

# PICTURE PRINTING APPARATUS

This invention relates to a picture printing apparatus, and more particularly to a picture printing apparatus wherein the picture is printed based upon the features of an original picture.

A thermal transfer printing system is a transfer system which transfers the ink of an inkfilm coated with thermal melting or thermal sublimating ink to the printing paper by a thermal head. The thermal head is heated by applying power to a thermal resistance element. A thermal transfer printing system using the thermal melting ink is suitable particularly for binary images having only "1" and "0" concentration levels. For multivalence pictures, a special concentration modulation technique is necessary. For this concentration modulation technique, a pseudo halftone printing system for expressing the halftone picture has been attempted by modifying dot density or the ink occupation ratio over a constant area. This is a system widely used to display the gradations with a dot printer that has only the

binary concentration expression ability. Typical examples of this method include the dither method, fixed concentration pattern method and multivalence concentration pattern method.

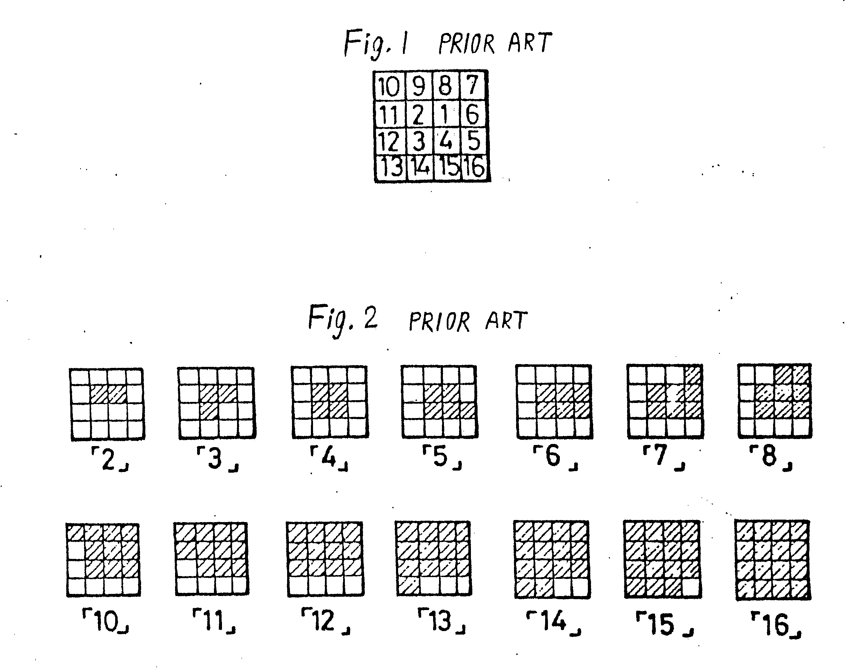

With the dither method, the concentration level of dots in portions of the original picture are compared with threshold levels corresponding to the location of those portions. The dots of a given portion are only printed when the threshold level is exceeded. The dither method is a method to make multivalence pictures in a binary way using threshold patterns (shown in Fig.1), and the thermal energy supplied to every dot is the same. Therefore this dither method prints a picture in accordance with a variable gradation by controlling the number of printing dots and the ink occupation ratio in a given part of the picture.

With the fixed concentration pattern method, dots are printed according to the element pattern shown in Fig.2 based on the dot concentration of the corresponding picture element of the original picture.

A multivalence concentration pattern method has been developed by the present inventors, as described in U.S. Patent Application S.N.821,954. With the dither method and the fixed concentration pattern method, it is difficult to obtain clear and natural pictures taking into account the visual characteristics of the human being. Further, owing to the adverse influence of the thermal storage effect in the thermal head, discontinuities of gradation are formed in the medium and high concentration areas , uneveness results from unstable ink adhesion in the low and medium concentration areas,and so on.

According to this multivalence concentration pattern method developed by the present inventors, the thermal storage effect of the thermal head that was considered conventionally to be a hindrance in producing good prints, can be positively utilized, and smooth pictures of high quality can be produced with a stabilized gradation .

This multivalence concentration pattern method utilizes three dot patterns "A","B"and "C", corresponding to the low, medium and high concentration levels, respectively, and also corresponding to the energy areas supplied to the thermal head. The energy areas are mutually related to the printing concentration.

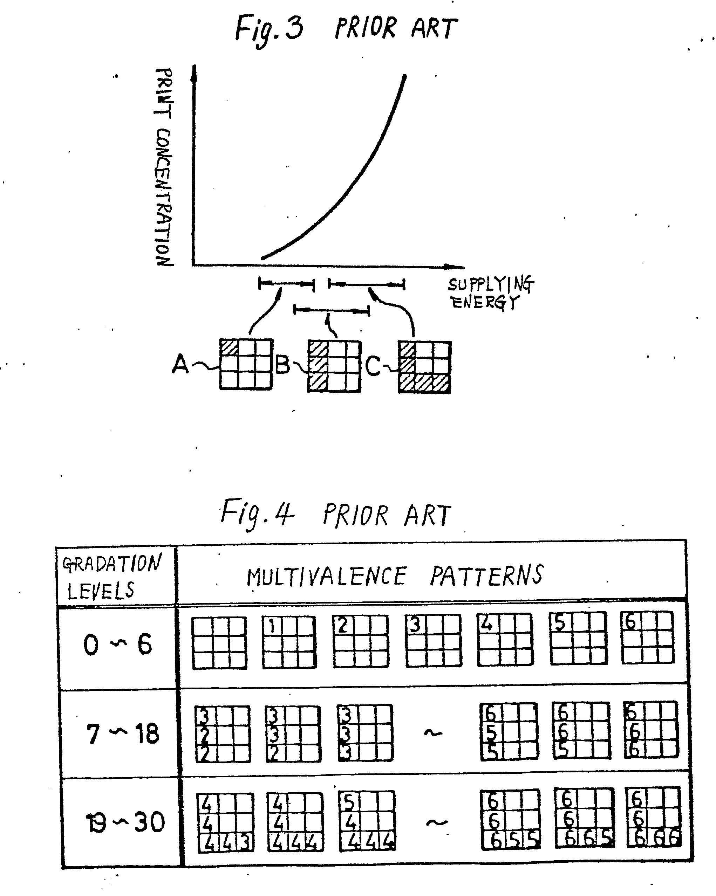

For example,as shown in Figs. 3 and 4, the low concentration fixed pattern "A" is an isolated dot pattern formed by isolating one dot in a picture element, and the gradations in the low concentration area are expressed by modulating the printing energy ( energy supplied to the thermal head) and changing the dot size. The medium concentration fixed pattern "B" is a stripe shaped pattern extending in the relative transfer direction (subscanning direction) between the thermal head and printing paper, and the gradations in the medium concentration area are expressed by changing the stripe width by the energy supplied to the thermal head. Furthermore, the high concentration fixed pattern "C" is an L-shaped pattern combined with a white section of dimension 2 x 2, and the gradations of high concentration are expressed by changing the size of the white section in proportion to the remaining portion of the L-shaped dot pattern.

The concept of this multivalence concentration method was disclosed by the present inventors in Proceedings of 3rd Japanese Symposium on Non-Impact Printing Technologies Symposium, reporting the results of the Symposium held on July 24 and 25, 1986.

Either the multivalence concentration pattern method or the fixed concentration pattern method may be used for good quality printing of multivalence pictures, but if the multivalence pattern method is used for printing binary pictures, poor quality pictures result because the matrix is enlarged. For this reason, mixed multivalence and binary pictures cannot be printed clearly, because the binary portion has such a low resolution.

Thus, there is a problem of decreased resolution when binary pictures are printed by using the fixed concentration pattern method or the multivalence concentration pattern method.

Another printing method was proposed in Laid Open Japanese Application No.1986-82577 for printing mixed pictures of the multivalence and binary type. In this system, pictures are printed by either the binary printing method or the dither method, or a combination of the two, with halftone pictures being printed by the dither method. All gradational parts are printed by the dither method. Thus, due to the influence of the thermal storage effect in the medium and high concentration areas, all of the adverse effects described previously are encountered.

It is an object of the present invention to provide a new and improved printing apparatus particularly suitable for printing pictures with mixed binary picture elements and halftone picture elements.

According to a first aspect of the present invention, a picture printing apparatus for reproducing an original image comprises means for detecting the picture signal from each of a plurality of individual areas on the original image, each area being divided into a plurality of dot segments; means for generating a multivalence concentration pattern including a variable dot value corresponding to each dot segment of the original image in response to the detecting means; means responsive to the detecting means for generating a binary pattern including one of two fixed dot values corresponding to each dot segment of the original image; means for selecting the dot value from one of the binary and multivalence patterns corresponding to each individual dot segment to be printed; and means for printing dots in the dot segments corresponding to the selected dot values in response to the selecting means for reproducing the original image.

According to a second aspect of the present invention, a picture printing apparatus for reproducing an original color image based comprises means for detecting the picture signal from each of a plurality of individual areas on the original image, each area being divided into a plurality of dot segments, including a high resolution sensor and a low resolution sensor; means for generating a multivalence concentration pattern including a variable dot value corresponding to each dot segment of the original image in response to the low resolution sensor; means responsive to the low resolution sensor for generating a binary pattern including one of two fixed dot values corresponding to each dot segment of the original image; means responsive to the high resolution sensor for selecting the dot value from one of the binary and multivalence patterns corresponding to each individual dot segment to be printed; and means for printing dots in the dot segments corresponding to the selected dot values in response to the selecting means.

In order that the invention may be more readily understood, it will now be described, by way of example only, with reference to the accompanying drawings, in which:-

Figures 1 to 4 illustrate prior art printing systems;

Figure 5 is a block diagram of an embodiment of the present invention;

Figure 6 illustrates dot patterns of an embodiment of the present invention;

Fig. 7 is a time chart to explain the operation of the present invention;

Figs. 8 and 9 are detailed block diagrams of the main portion of the embodiment of Fig. 5;

Fig. 10 is Laplacian signal analysis chart of the ROM 49 of Fig.9;

Fig. 11 is a typical dot matrix pattern used in this invention;

Figs. 12 and 13 show examples of dot print patterns of the invention;

Fig. 14 is a detailed block diagram of the main portion of the embodiment of Fig. 5;

Fig. 15 is a block diagram of the another embodiment of the present invention;

Fig. 16 shows the operation of the embodiment of Fig. 15;

Fig. 17 is a block diagram of a further embodiment of the present invention.


Detailed Description of the Preferred Embodiments


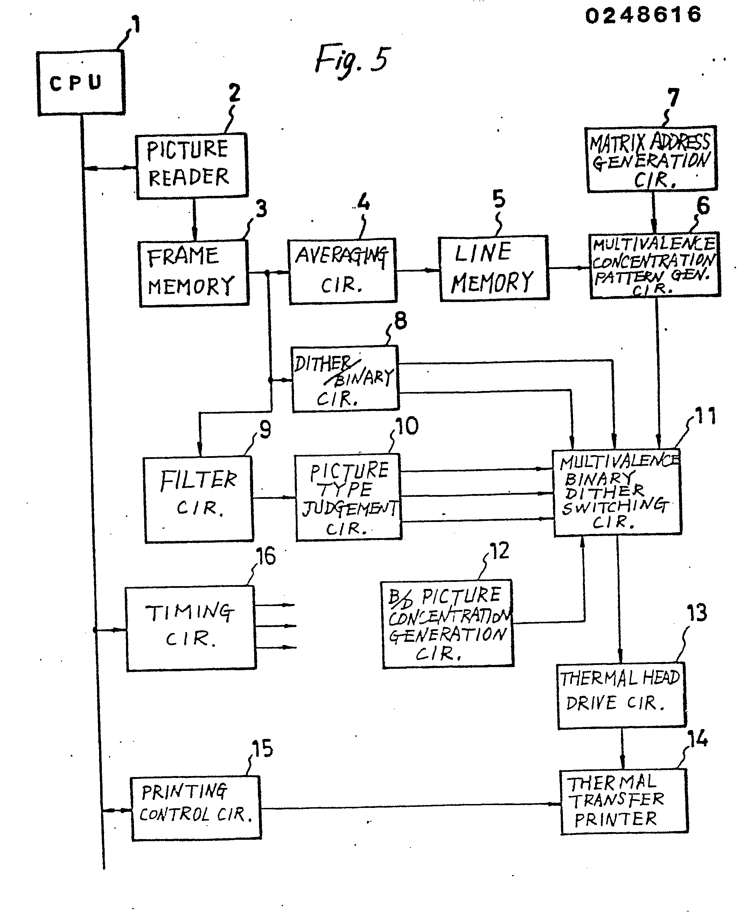

As illustrated in Fig. 5, the apparatus of the present ivention includes a CPU 1, used to control the whole unit, a print control circuit 15 and a timing circuit 16. A picture reader 2 generates picture signals by reading pictures (original pictures) including the halftone portions thereof. Picture signals are converted and output as multivalence digital signals (for example, expressed as 8 bits per picture element). A frame memory 3 stores the picture signals generated by the picture reader 2. The frame memory 3 is not required in case the picture read operation and printing output operation are not separated in terms of the time.

The output of the frame memory 3 is input into a multivalence concentration pattern generation circuit 6 through an averaging circuit 4 and a line memory 5, and signals for multivalence picture printing are generated. That is to say, the averaging circuit 4 is a circuit to carry out the averaging processing of M X M corresponding to M X N dots of the multivalence concentration pattern matrix size on the multivalence picture signal data from the frame memory 5. This averaged data is transferred one line at a time to the line memory 5 (portion of N lines before averaging). The multivalence concentration pattern generation circuit 6 generates signals for multivalence picture printing of the multivalence concentration patterns composed of matrices of M X N dots, employing the data in this portion of one line. These signals for multivalence picture printing enlarge the pattern size to M times in the main scanning direction, and to N times in the subscanning direction (N lines), respectively, against the multivalence picture signals input into the multivalence concentration pattern generation circuit 6. Therefore, averaged multivalence picture signals are supplied to the line memory 5 from the averaging circuit 4 one line at a time. The multivalence concentration pattern generation circuit 6 is controlled by a matrix address generation circuit 7.

A dither/binary circuit 8 carrys out the dither processing and binary processing for picture signals output

9

0248616

from the frame memory 3, and generates dither picture signals and binary picture signals.

The output signals of the frame memory 3 are applied to picture type judgement circuit 10 through a filter circuit 9. The picture type judgement circuit 10 determines whether the input picture is a multivalence picture or a binary picture. There are cases when this judgement cannot be made, and in such cases, the judgement circuit 10 outputs a different signal corresponding to this condition.

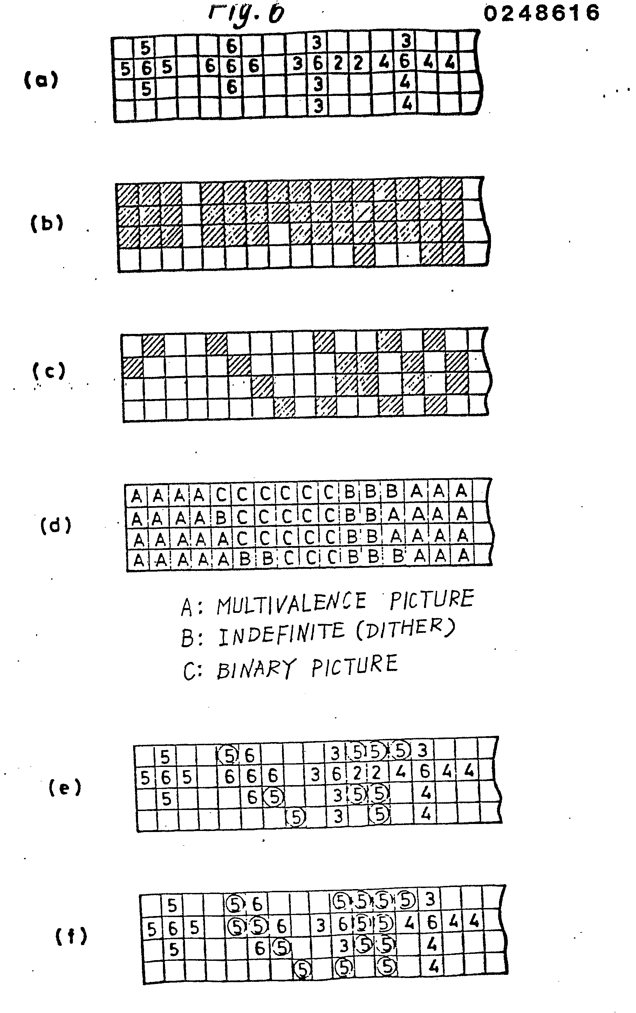

A multivalence, binary and dither switching circuit 11 switches the printing picture mode on the basis of the judgement result of the picture type judgement circuit 10. In case the judgement result of the judgement circuit 10 indicates a multivalent picture, signals for multivalence picture recording from the multivalence concentration pattern generation circuit 6 are output. Further, in case the judgement result indcates binary pictures, binary picture signals from the dither/binary circuit 8 are output after being individually modulated. Further, in case the judgement result is indefinite (no judgement), dither picture signals from the dither/binary circuit 8 are output after being modulated. The multivalence, binary and dither switching circuit 11 carries out its switching dot by dot. Fig. 6 shows this aspect. Fig.6 (a) shows the data of signals for multivalence picture printing, after conversion to multivalence concentration patterns in the multivalence concentration pattern generation circuit 6, and Fig 6 (b) and Fig 6 (c) show the data of dither pictures and binary pictures obtained in the dither/binary circuit 8, respectively. Further, Fig. 6 (d) is an example of the judgement output in the picture type judgement circuit 10. "A" shows the judgement result for multivalence pictures, "B" for indefinite (no judgement), and "C" for binary pictures, respectively. The multivalence, binary and dither switching circuit 11 switches printing output pictures in accordance with this judgement result, and this switching can be changed as shown in Figs. 6 (e) and (f) whether binary pictures or multivalence concentration pictures are present.

A binary and dither picture concentration generation circuit 12 generates signals corresponding to the necessary printing energy (supplying energy of the thermal head) so that printed dots are of a proper size. The expressions ⑤ on the pattern shown in Fig. 6 correspond to the printing concentration of binary pictures.

Signals for multivalence picture printing thus output from the multivalence, binary and dither switching circuit 11 are supplied to a thermal head drive circuit 13. The thermal head drive circuit 13 converts the multivalence concentration patterns given by signals for multivalence picture printing to the pulse width of pulses to drive the thermal head in the thermal transfer printer 14. The drive circiut 13 also controls the supply of energy to the thermal head. The printing control circuit 15 controls the thermal transfer printer 14, and accurately carries out the transport, control, etc. of the ink ribbon, printing paper, etc. by the commands from the CPU 1. A timing circuit 16 generates synchronous signals of one line that are required in case the data of picture signals is transferred, and supplies the synchronous signals to the required circuit.

For example, the timing circuit may act as a timing clock for data transfer.

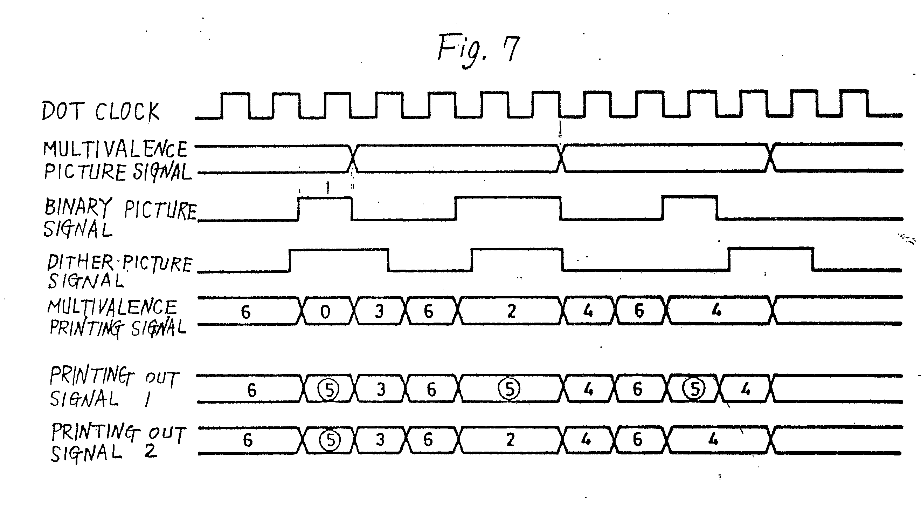

Fig. 7 is a timing chart to show the operation of the present embodiment, and one cycle of dot clock corresponds to the printing time of one dot by the thermal head. Multivalence picture signals are switched once in four cycles of dot clock. In the meantime, the multivalence concentration pattern generation circuit 6 is controlled by the matrix address generation circuit 7, and signals for multivalence picture printing of four dots are generated. On the other hand, binary picture signals and dither picture signals from the dither/binary circuit 8 are input as data corresponding to one dot, and the printing energy given to each dot of signals for multivalence picture printing is modulated by this binary picture signal. That is to say, among systems of signals for multivalence picture printing, the printing energy that binary picture signals and dither picture signals give to dots of "1" is demodulated, as shown in Fig. 6 (e) or (f), and finally the printing signal output 1 or 2, shown in Fig. 7, can be obtained.

In this way, it is possible to print mixed multivalent and binary pictures by the multivalence concentration pattern method and the binary method corresponding to one dot of thermal head per picture element.

The dither/binary circuit 8 carrys out the dither application processing and binary application processing for picture signals from the frame memory 3 and generates dither picture signals and binary picture signals.

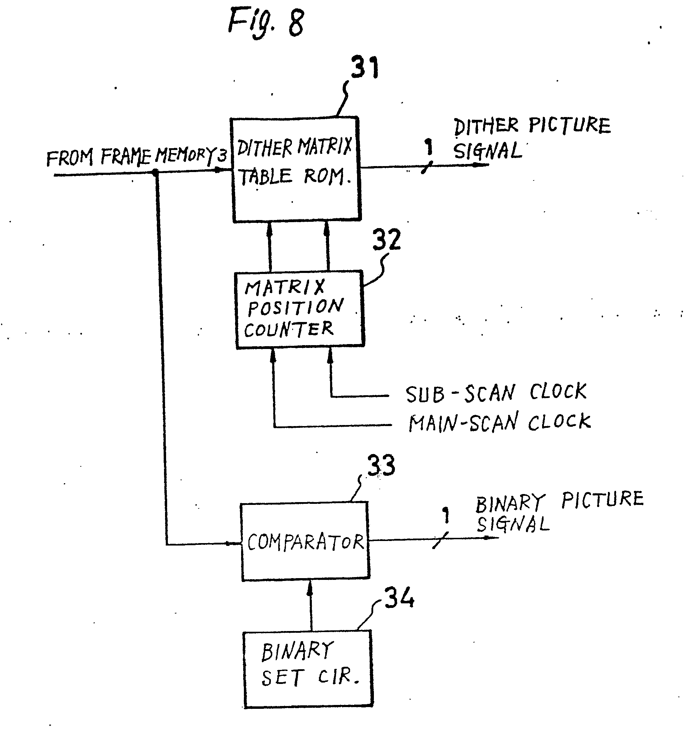

The specific configuration of the dither/binary circuit 8 is shown in Fig. 8. In Fig. 8, the multivalence picture signal data read from the frame memory 3 shown in Fig. 5 is input into a dither matrix table ROM 31 and a comparator 33. The ROM 31 is controlled by a matrix position counter 32 for matrix position setting. ROM 31 modulates the picture signal data input by dither patterns composed of M x N matrices, and outputs dither picture signals as data arrays of one bit. In addition, the M x N matrix size at the time of this dither application may be the same as the M x N of matrix size of multivalence concentration patterns. The comparator 33 receives the picture signal data from the frame memory 3 at the threshold level (binary application level).The threshold level is determined by the binary level setting circuit 34. Comparator 33 also outputs binary picture signals composed of data arrays of one bit. Further, it is also possible to vary the tone or concentration of the binary processing by changing the set level of the binary signal.

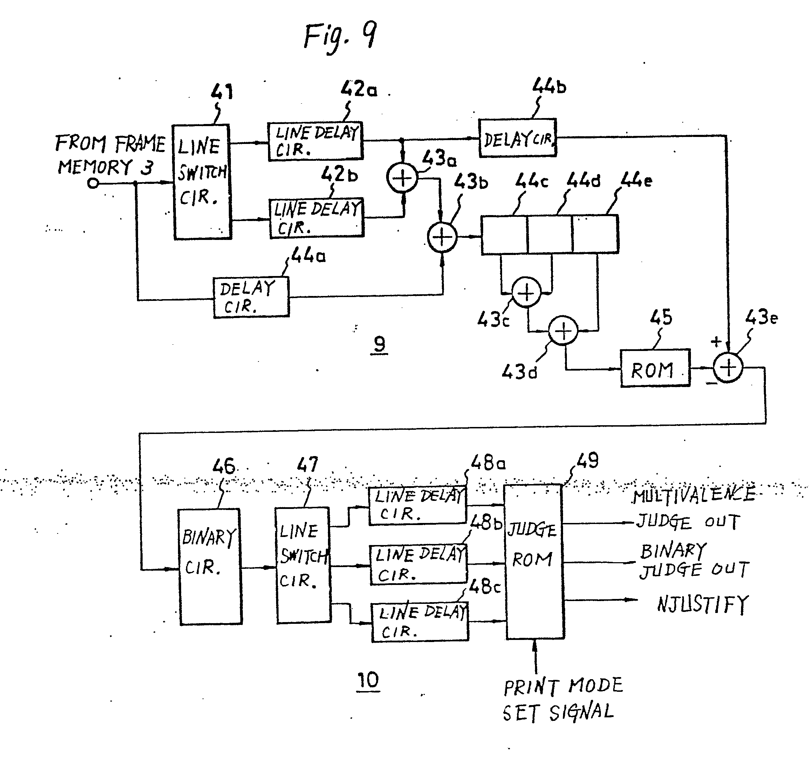

Fig. 9 shows in detail the configurations of filter circuit 9 and picture type judgement circuit 10. Three dot portions of the multivalence picture signal data from the frame memory 3 are added in the sub scanning direction and three dot portions are added in the main scanning direction, totaling nine dot portions of a picture element. That is to say, the multivalence picture signal data in a portion of two lines is held by the line delay circuits 42a and 42b through the line switching circuit 41. These are added by the adder 43a, and this addition result and the multivalence picture data in the a portion of another line (output of the delay circuit 44a) are added by the adder 43b. The results for each of these additions are consecutively delayed by the delay circuits 44c to 44e, and the output of these delay circuits 44c to 44e is added by the adders 43c and 43d, resulting in a total value for each successive nine dot matrix series.

A mean value for each picture is read from the ROM 45 based upon the total added result for eacn successiive nine dot matrix. The mean value added from the ROM 45 is the binary complement of 1/9 of the added result. A high-pass component of the original picture signal is used to judge the type of the picture. The highpass component is extracted by adding the averaged picture signal data (output of the ROM45) and the original picture signal data (output of the delay circuit 44b) with the adder 43(e). The addition by the adder 43(e) is synchronized in accordance with the delay circuits 44(a) and 44(b).

The high-pass component of the averaged value of nine dot portions from the filter circuit 9 is input into the picture type judgement circuit 10. After being applied to the binary application circuit 46, the signal is consecutively delayed by the line delay circuits 48a to 48c through the line switching circuit 47. The data of nine dot portions, which includes data on three dots output from each of the line delay circuits 48a to 48c, is input into the judgement ROM 49, and the judgement of multivalence, binary or indefinite is carried out.

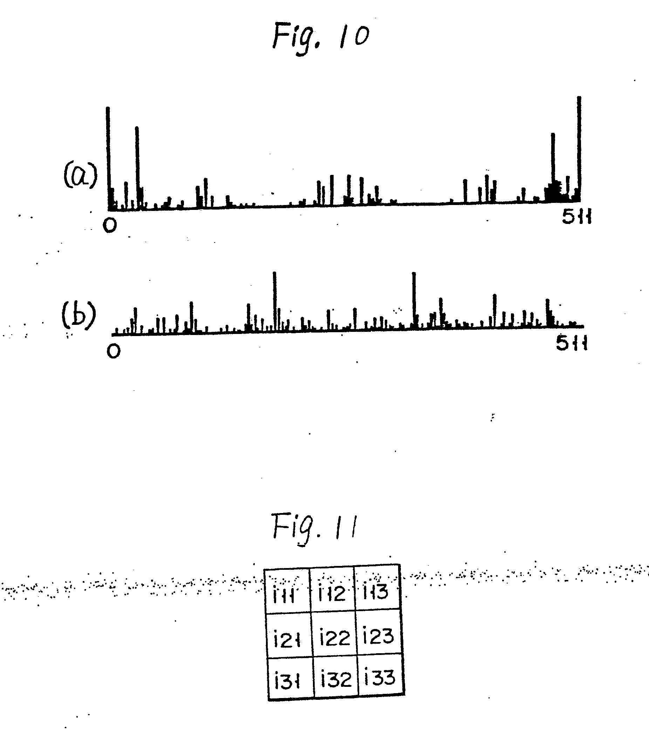

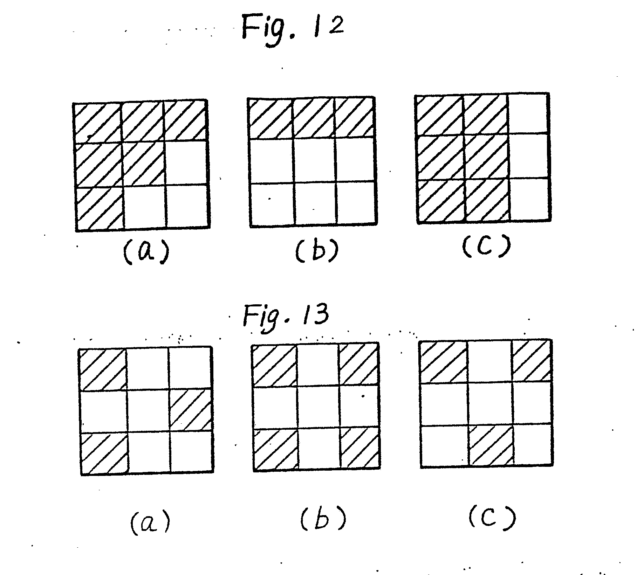

Next, the operation of the judgement ROM 49 is explained. Examination was made of the distribution of binary Laplacian and dot picture. The results were obtained as shown in Fig.10. In this Figure, the abscissa represents the arrangement of binary Laplacian signals in a matrix of 3 x 3 and the ordinate represents the frequency with which the 0248616 arrangement of binary Laplacian signals occurs. The arrangement of binary Laplacian signals consists of nine bits of data whose MSB and LSB correspond to i11 and i33 in the 3 x 3 matrix shown in Fig.11, respectively. For example,where only the binary Laplacian signal corresponding to i11 is 1, the nine bit data is given by "100000000". At the left end of the abscissa, all binary Laplacian signals for the 3 x 3 matrix are 0 and, at the right end thereof, all binary Laplacian signals are 1. As seen from the result shown in Fig. 10(a) in the case of character pictures,such patterns of binary Laplacian signals as shown in Fig.12 (a), (b) and (c) appear with a higher frequency. In this case,there is a tendency that not only white dots, but also black dots, are arranged side by side to some extent. This tendency coincides with the qualitative tendency of a character pattern.

On the other hand, the result shown in Fig.11(b) typicallyis obtained with respect to dot pictures. As seen,such patterns of binary Laplacian signals as shown in Figs.13(a),13(b) and 13(c) appear with a higher frequency. This indicates the qualitative tendency of dot pictures, where neither white dots nor black dots are normally continuously arranged but have a more periodic pattern. In Figs.12 and 13, portions where oblique lines are drawn each represent the binary Laplacian signal of "1" and portions where no lines are drawn each represent the binary Laplacian signal of "1", and portions where no lines are drawn each represent the binary Laplacian signal of "0".

Accordingly, discrimination of the type of input pictures becomes possible by examining the magnitude of Laplacian signals and the distribution of binary Laplacian signals. For this reason, in the filter circuit 9, the Laplacian signals are binary encoded and the address signal indicating the distribution of binary Laplacian signals in the 3 x 3 pixel array is applied to the ROM 49.

The contents of the ROM 49 are determined by comparing the normal appearance frequencies of binary Laplacian signals for letter-like pictures and dot-like pictures,and for example, determining the difference between those frequencies. In cases where the appearance frequency for letter-like pictures is greater than for dot-like pictures, one pattern is assigned as a letter-like picture defined by the code "11". Where it is determined that the frequency for dot-like pictures is greater, the code "00" is assigned. When the difference does not exceed specified level,the pattern is assigned as a "no judgement" picture with a code "10" or "01". The code "10" is assigned when the appearance frequency of the binary Laplacian signal pattern for letter-like pictures is largest, and the code "01" is assigned when the dot-like picture frequency is largest.

Next, tables 1 to 8 show the binary Laplacian signal patterns in which the address numbers and the binary Laplacian signal patterns are indicated by "0","1" patterns, and the results of judgement (the contents of the ROM49 ) are indicated by "0" (corresponding to above-mentioned code "00") "1" (corresponding to above-mentioned code "01"), "2" (corresponding to above-mentioned code "10"), and "3" (corresponding to above-mentioned code "11"). Thus,the code "0" expresses the multivalence picture,"3" expresses the binary picture and "1" or "2" express the "no judgement" picture.

# TABLE 1

0248616

ADDRESS → / LAPLACIAN PATTERN → / RESULT of JUDGEMENT →

| Address | Laplacian Pattern (row 1 / row 2 / row 3) | Result of Judgement |
|---------|--------------------------------------------|---------------------|
| 0  | 000 / 000 / 000 | 3 |
| 1  | 000 / 000 / 001 | 1 |
| 2  | 000 / 000 / 010 | 1 |
| 3  | 000 / 000 / 011 | 3 |
| 4  | 000 / 000 / 100 | 1 |
| 5  | 000 / 000 / 101 | 2 |
| 6  | 000 / 000 / 110 | 3 |
| 7  | 000 / 000 / 111 | 3 |
| 8  | 000 / 001 / 000 | 1 |
| 9  | 000 / 001 / 001 | 3 |
| 10 | 000 / 001 / 010 | 0 |
| 11 | 000 / 001 / 011 | 2 |
| 12 | 000 / 001 / 100 | 0 |
| 13 | 000 / 001 / 101 | 1 |
| 14 | 000 / 001 / 110 | 0 |
| 15 | 000 / 001 / 111 | 3 |
| 16 | 000 / 010 / 000 | 1 |
| 17 | 000 / 010 / 001 | 1 |
| 18 | 000 / 010 / 010 | 0 |
| 19 | 000 / 010 / 011 | 0 |
| 20 | 000 / 010 / 100 | 1 |
| 21 | 000 / 010 / 101 | 0 |
| 22 | 000 / 010 / 110 | 0 |
| 23 | 000 / 010 / 111 | 2 |
| 24 | 000 / 011 / 000 | 0 |
| 25 | 000 / 011 / 001 | 0 |
| 26 | 000 / 011 / 010 | 0 |
| 27 | 000 / 011 / 011 | 2 |
| 28 | 000 / 011 / 100 | 0 |
| 29 | 000 / 011 / 101 | 0 |
| 30 | 000 / 011 / 110 | 0 |
| 31 | 000 / 011 / 111 | 3 |
| 32 | 000 / 100 / 000 | 1 |
| 33 | 000 / 100 / 001 | 0 |
| 34 | 000 / 100 / 010 | 0 |
| 35 | 000 / 100 / 011 | 0 |
| 36 | 000 / 100 / 100 | 3 |
| 37 | 000 / 100 / 101 | 1 |
| 38 | 000 / 100 / 110 | 2 |
| 39 | 000 / 100 / 111 | 3 |
| 40 | 000 / 101 / 000 | 1 |
| 41 | 000 / 101 / 001 | 1 |
| 42 | 000 / 101 / 010 | 1 |
| 43 | 000 / 101 / 011 | 1 |
| 44 | 000 / 101 / 100 | 1 |
| 45 | 000 / 101 / 101 | 1 |
| 46 | 000 / 101 / 110 | 0 |
| 47 | 000 / 101 / 111 | 3 |
| 48 | 000 / 110 / 000 | 0 |
| 49 | 000 / 110 / 001 | 0 |
| 50 | 000 / 110 / 010 | 0 |
| 51 | 000 / 110 / 011 | 0 |
| 52 | 000 / 110 / 100 | 0 |
| 53 | 000 / 110 / 101 | 0 |
| 54 | 000 / 110 / 110 | 2 |
| 55 | 000 / 110 / 111 | 3 |
| 56 | 000 / 111 / 000 | 2 |
| 57 | 000 / 111 / 001 | 1 |
| 58 | 000 / 111 / 010 | 0 |
| 59 | 000 / 111 / 011 | 2 |
| 60 | 000 / 111 / 100 | 1 |
| 61 | 000 / 111 / 101 | 2 |
| 62 | 000 / 111 / 110 | 2 |
| 63 | 000 / 111 / 111 | 3 |

# TABLE 2

| 64 | 65 | 66 | 67 | 68 | 69 | 70 | 71 |
|---|---|---|---|---|---|---|---|
| 0 0 1 | 0 0 1 | 0 0 1 | 0 0 1 | 0 0 1 | 0 0 1 | 0 0 1 | 0 0 1 |
| 0 0 0 | 0 0 0 | 0 0 0 | 0 0 0 | 0 0 0 | 0 0 0 | 0 0 0 | 0 0 0 |
| 0 0 0 | 0 0 1 | 0 1 0 | 0 1 1 | 1 0 0 | 1 0 1 | 1 1 0 | 1 1 1 |
| 1 | 3 | 0 | 1 | 1 | 1 | 0 | 1 |

| 72 | 73 | 74 | 75 | 76 | 77 | 78 | 79 |
|---|---|---|---|---|---|---|---|
| 0 0 1 | 0 0 1 | 0 0 1 | 0 0 1 | 0 0 1 | 0 0 1 | 0 0 1 | 0 0 1 |
| 0 0 1 | 0 0 1 | 0 0 1 | 0 0 1 | 0 0 1 | 0 0 1 | 0 0 1 | 0 0 1 |
| 0 0 0 | 0 0 1 | 0 1 0 | 0 1 1 | 1 0 0 | 1 0 1 | 1 1 0 | 1 1 1 |
| 3 | 3 | 0 | 3 | 0 | 1 | 0 | 2 |

| 80 | 81 | 82 | 83 | 84 | 85 | 86 | 87 |
|---|---|---|---|---|---|---|---|
| 0 0 1 | 0 0 1 | 0 0 1 | 0 0 1 | 0 0 1 | 0 0 1 | 0 0 1 | 0 0 1 |
| 0 1 0 | 0 1 0 | 0 1 0 | 0 1 0 | 0 1 0 | 0 1 0 | 0 1 0 | 0 1 0 |
| 0 0 0 | 0 0 1 | 0 1 0 | 0 1 1 | 1 0 0 | 1 0 1 | 1 1 0 | 1 1 1 |
| 1 | 1 | 0 | 0 | 0 | 0 | 0 | 0 |

| 88 | 89 | 90 | 91 | 92 | 93 | 94 | 95 |
|---|---|---|---|---|---|---|---|
| 0 0 1 | 0 0 1 | 0 0 1 | 0 0 1 | 0 0 1 | 0 0 1 | 0 0 1 | 0 0 1 |
| 0 1 1 | 0 1 1 | 0 1 1 | 0 1 1 | 0 1 1 | 0 1 1 | 0 1 1 | 0 1 1 |
| 0 0 0 | 0 0 1 | 0 1 0 | 0 1 1 | 1 0 0 | 1 0 1 | 1 1 0 | 1 1 1 |
| 0 | 2 | 0 | 3 | 0 | 0 | 1 | 2 |

| 96 | 97 | 98 | 99 | 100 | 101 | 102 | 103 |
|---|---|---|---|---|---|---|---|
| 0 0 1 | 0 0 1 | 0 0 1 | 0 0 1 | 0 0 1 | 0 0 1 | 0 0 1 | 0 0 1 |
| 1 0 0 | 1 0 0 | 1 0 0 | 1 0 0 | 1 0 0 | 1 0 0 | 1 0 0 | 1 0 0 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 0 |

| 104 | 105 | 106 | 107 | 108 | 109 | 110 | 111 |
|---|---|---|---|---|---|---|---|
| 0 0 1 | 0 0 1 | 0 0 1 | 0 0 1 | 0 0 1 | 0 0 1 | 0 0 1 | 0 0 1 |
| 1 0 1 | 1 0 1 | 1 0 1 | 1 0 1 | 1 0 1 | 1 0 1 | 1 0 1 | 1 0 1 |
| 0 0 0 | 0 0 1 | 0 1 0 | 0 1 1 | 1 0 0 | 1 0 1 | 1 1 0 | 1 1 1 |
| 0 | 1 | 0 | 1 | 0 | 0 | 0 | 1 |

| 112 | 113 | 114 | 115 | 116 | 117 | 118 | 119 |
|---|---|---|---|---|---|---|---|
| 0 0 1 | 0 0 1 | 0 0 1 | 0 0 1 | 0 0 1 | 0 0 1 | 0 0 1 | 0 0 1 |
| 1 1 0 | 1 1 0 | 1 1 0 | 1 1 0 | 1 1 0 | 1 1 0 | 1 1 0 | 1 1 0 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 0 |

| 120 | 121 | 122 | 123 | 124 | 125 | 126 | 127 |
|---|---|---|---|---|---|---|---|
| 0 0 1 | 0 0 1 | 0 0 1 | 0 0 1 | 0 0 1 | 0 0 1 | 0 0 1 | 0 0 1 |
| 1 1 1 | 1 1 1 | 1 1 1 | 1 1 1 | 1 1 1 | 1 1 1 | 1 1 1 | 1 1 1 |
| 0 0 0 | 0 0 1 | 0 1 0 | 0 1 1 | 1 0 0 | 1 0 1 | 1 1 0 | 1 1 1 |
| 1 | 1 | 0 | 2 | 0 | 1 | 2 | 3 |

# TABLE 3

| 128 | 129 | 130 | 131 | 132 | 133 | 134 | 135 |
|---|---|---|---|---|---|---|---|
| 0 1 0 | 0 1 0 | 0 1 0 | 0 1 0 | 0 1 0 | 0 1 0 | 0 1 0 | 0 1 0 |
| 0 0 0 | 0 0 0 | 0 0 0 | 0 0 0 | 0 0 0 | 0 0 0 | 0 0 0 | 0 0 0 |
| 0 0 0 | 0 0 1 | 0 1 0 | 0 1 1 | 1 0 0 | 1 0 1 | 1 1 0 | 1 1 1 |
| 1 | 0 | 1 | 0 | 0 | 0 | 0 | 1 |

| 136 | 137 | 138 | 139 | 140 | 141 | 142 | 143 |
|---|---|---|---|---|---|---|---|
| 0 1 0 | 0 1 0 | 0 1 0 | 0 1 0 | 0 1 0 | 0 1 0 | 0 1 0 | 0 1 0 |
| 0 0 1 | 0 0 1 | 0 0 1 | 0 0 1 | 0 0 1 | 0 0 1 | 0 0 1 | 0 0 1 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 1 |

| 144 | 145 | 146 | 147 | 148 | 149 | 150 | 151 |
|---|---|---|---|---|---|---|---|
| 0 1 0 | 0 1 0 | 0 1 0 | 0 1 0 | 0 1 0 | 0 1 0 | 0 1 0 | 0 1 0 |
| 0 1 0 | 0 1 0 | 0 1 0 | 0 1 0 | 0 1 0 | 0 1 0 | 0 1 0 | 0 1 0 |
| 0 0 0 | 0 0 1 | 0 1 0 | 0 1 1 | 1 0 0 | 1 0 1 | 1 1 0 | 1 1 1 |
| 0 | 0 | 2 | 1 | 0 | 0 | 1 | 0 |

| 152 | 153 | 154 | 155 | 156 | 157 | 158 | 159 |
|---|---|---|---|---|---|---|---|
| 0 1 0 | 0 1 0 | 0 1 0 | 0 1 0 | 0 1 0 | 0 1 0 | 0 1 0 | 0 1 0 |
| 0 1 1 | 0 1 1 | 0 1 1 | 0 1 1 | 0 1 1 | 0 1 1 | 0 1 1 | 0 1 1 |
| 0 0 0 | 0 0 1 | 0 1 0 | 0 1 1 | 1 0 0 | 1 0 1 | 1 1 0 | 1 1 1 |
| 0 | 0 | 0 | 2 | 0 | 0 | 0 | 2 |

| 160 | 161 | 162 | 163 | 164 | 165 | 166 | 167 |
|---|---|---|---|---|---|---|---|
| 0 1 0 | 0 1 0 | 0 1 0 | 0 1 0 | 0 1 0 | 0 1 0 | 0 1 0 | 0 1 0 |
| 1 0 0 | 1 0 0 | 1 0 0 | 1 0 0 | 1 0 0 | 1 0 0 | 1 0 0 | 1 0 0 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 1 |

| 168 | 169 | 170 | 171 | 172 | 173 | 174 | 175 |
|---|---|---|---|---|---|---|---|
| 0 1 0 | 0 1 0 | 0 1 0 | 0 1 0 | 0 1 0 | 0 1 0 | 0 1 0 | 0 1 0 |
| 1 0 1 | 1 0 1 | 1 0 1 | 1 0 1 | 1 0 1 | 1 0 1 | 1 0 1 | 1 0 1 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 1 |

| 176 | 177 | 178 | 179 | 180 | 181 | 182 | 183 |
|---|---|---|---|---|---|---|---|
| 0 1 0 | 0 1 0 | 0 1 0 | 0 1 0 | 0 1 0 | 0 1 0 | 0 1 0 | 0 1 0 |
| 1 1 0 | 1 1 0 | 1 1 0 | 1 1 0 | 1 1 0 | 1 1 0 | 1 1 0 | 1 1 0 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 2 | 2 |

| 184 | 185 | 186 | 187 | 188 | 189 | 190 | 191 |
|---|---|---|---|---|---|---|---|
| 0 1 0 | 0 1 0 | 0 1 0 | 0 1 0 | 0 1 0 | 0 1 0 | 0 1 0 | 0 1 0 |
| 1 1 1 | 1 1 1 | 1 1 1 | 1 1 1 | 1 1 1 | 1 1 1 | 1 1 1 | 1 1 1 |
| 0 0 0 | 0 0 1 | 0 1 0 | 0 1 1 | 1 0 0 | 1 0 1 | 1 1 0 | 1 1 1 |
| 0 | 0 | 0 | 3 | 0 | 0 | 3 | 3 |

# TABLE 4

```
192        193        194        195        196        197        198        199
0 1 1      0 1 1      0 1 1      0 1 1      0 1 1      0 1 1      0 1 1      0 1 1
0 0 0      0 0 0      0 0 0      0 0 0      0 0 0      0 0 0      0 0 0      0 0 0
0 0 0      0 0 1      0 1 0      0 1 1      1 0 0      1 0 1      1 1 0      1 1 1
   3          1          0          1          0          0          0          0

200        201        202        203        204        205        206        207
0 1 1      0 1 1      0 1 1      0 1 1      0 1 1      0 1 1      0 1 1      0 1 1
0 0 1      0 0 1      0 0 1      0 0 1      0 0 1      0 0 1      0 0 1      0 0 1
0 0 0      0 0 1      0 1 0      0 1 1      1 0 0      1 0 1      1 1 0      1 1 1
   2          3          0          3          0          0          0          1

208        209        210        211        212        213        214        215
0 1 1      0 1 1      0 1 1      0 1 1      0 1 1      0 1 1      0 1 1      0 1 1
0 1 0      0 1 0      0 1 0      0 1 0      0 1 0      0 1 0      0 1 0      0 1 0
0 0 0      0 0 1      0 1 0      0 1 1      1 0 0      1 0 1      1 1 0      1 1 1
   0          0          1          2          0          0          0          1

216        217        218        219        220        221        222        223
0 1 1      0 1 1      0 1 1      0 1 1      0 1 1      0 1 1      0 1 1      0 1 1
0 1 1      0 1 1      0 1 1      0 1 1      0 1 1      0 1 1      0 1 1      0 1 1
0 0 0      0 0 1      0 1 0      0 1 1      1 0 0      1 0 1      1 1 0      1 1 1
   2          3          2          3          0          0          2          3

224        225        226        227        228        229        230        231
0 1 1      0 1 1      0 1 1      0 1 1      0 1 1      0 1 1      0 1 1      0 1 1
1 0 0      1 0 0      1 0 0      1 0 0      1 0 0      1 0 0      1 0 0      1 0 0
0 0 0      0 0 1      0 1 0      0 1 1      1 0 0      1 0 1      1 1 0      1 1 1
   0          0          0          0          0          0          0          0

232        233        234        235        236        237        238        239
0 1 1      0 1 1      0 1 1      0 1 1      0 1 1      0 1 1      0 1 1      0 1 1
1 0 1      1 0 1      1 0 1      1 0 1      1 0 1      1 0 1      1 0 1      1 0 1
0 0 0      0 0 1      0 1 0      0 1 1      1 0 0      1 0 1      1 1 0      1 1 1
   0          1          0          2          0          0          0          2

240        241        242        243        244        245        246        247
0 1 1      0 1 1      0 1 1      0 1 1      0 1 1      0 1 1      0 1 1      0 1 1
1 1 0      1 1 0      1 1 0      1 1 0      1 1 0      1 1 0      1 1 0      1 1 0
0 0 0      0 0 1      0 1 0      0 1 1      1 0 0      1 0 1      1 1 0      1 1 1
   0          0          0          0          1          0          2          2

248        249        250        251        252        253        254        255
0 1 1      0 1 1      0 1 1      0 1 1      0 1 1      0 1 1      0 1 1      0 1 1
1 1 1      1 1 1      1 1 1      1 1 1      1 1 1      1 1 1      1 1 1      1 1 1
0 0 0      0 0 1      0 1 0      0 1 1      1 0 0      1 0 1      1 1 0      1 1 1
   2          2          3          3          2          2          3          3
```

## TABLE 5

0248616

| 256 | 257 | 258 | 259 | 260 | 261 | 262 | 263 |
|---|---|---|---|---|---|---|---|
| 1 0 0 | 1 0 0 | 1 0 0 | 1 0 0 | 1 0 0 | 1 0 0 | 1 0 0 | 1 0 0 |
| 0 0 0 | 0 0 0 | 0 0 0 | 0 0 0 | 0 0 0 | 0 0 0 | 0 0 0 | 0 0 0 |
| 0 0 0 | 0 0 1 | 0 1 0 | 0 1 1 | 1 0 0 | 1 0 1 | 1 1 0 | 1 1 1 |
| 1 | 1 | 0 | 0 | 3 | 1 | 1 | 1 |

| 264 | 265 | 266 | 267 | 268 | 269 | 270 | 271 |
|---|---|---|---|---|---|---|---|
| 1 0 0 | 1 0 0 | 1 0 0 | 1 0 0 | 1 0 0 | 1 0 0 | 1 0 0 | 1 0 0 |
| 0 0 1 | 0 0 1 | 0 0 1 | 0 0 1 | 0 0 1 | 0 0 1 | 0 0 1 | 0 0 1 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 0 |

| 272 | 273 | 274 | 275 | 276 | 277 | 278 | 279 |
|---|---|---|---|---|---|---|---|
| 1 0 0 | 1 0 0 | 1 0 0 | 1 0 0 | 1 0 0 | 1 0 0 | 1 0 0 | 1 0 0 |
| 0 1 0 | 0 1 0 | 0 1 0 | 0 1 0 | 0 1 0 | 0 1 0 | 0 1 0 | 0 1 0 |
| 0 0 0 | 0 0 1 | 0 1 0 | 0 1 1 | 1 0 0 | 1 0 1 | 1 1 0 | 1 1 1 |
| 1 | 0 | 0 | 0 | 1 | 0 | 0 | 0 |

| 280 | 281 | 282 | 283 | 284 | 285 | 286 | 287 |
|---|---|---|---|---|---|---|---|
| 1 0 0 | 1 0 0 | 1 0 0 | 1 0 0 | 1 0 0 | 1 0 0 | 1 0 0 | 1 0 0 |
| 0 1 1 | 0 1 1 | 0 1 1 | 0 1 1 | 0 1 1 | 0 1 1 | 0 1 1 | 0 1 1 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 0 |

| 288 | 289 | 290 | 291 | 292 | 293 | 294 | 295 |
|---|---|---|---|---|---|---|---|
| 1 0 0 | 1 0 0 | 1 0 0 | 1 0 0 | 1 0 0 | 1 0 0 | 1 0 0 | 1 0 0 |
| 1 0 0 | 1 0 0 | 1 0 0 | 1 0 0 | 1 0 0 | 1 0 0 | 1 0 0 | 1 0 0 |
| 0 0 0 | 0 0 1 | 0 1 0 | 0 1 1 | 1 0 0 | 1 0 1 | 1 1 0 | 1 1 1 |
| 3 | 0 | 0 | 0 | 3 | 1 | 3 | 2 |

| 296 | 297 | 298 | 299 | 300 | 301 | 302 | 303 |
|---|---|---|---|---|---|---|---|
| 1 0 0 | 1 0 0 | 1 0 0 | 1 0 0 | 1 0 0 | 1 0 0 | 1 0 0 | 1 0 0 |
| 1 0 1 | 1 0 1 | 1 0 1 | 1 0 1 | 1 0 1 | 1 0 1 | 1 0 1 | 1 0 1 |
| 0 0 0 | 0 0 1 | 0 1 0 | 0 1 1 | 1 0 0 | 1 0 1 | 1 1 0 | 1 1 1 |
| 0 | 0 | 0 | 1 | 0 | 0 | 1 | 1 |

| 304 | 305 | 306 | 307 | 308 | 309 | 310 | 311 |
|---|---|---|---|---|---|---|---|
| 1 0 0 | 1 0 0 | 1 0 0 | 1 0 0 | 1 0 0 | 1 0 0 | 1 0 0 | 1 0 0 |
| 1 1 0 | 1 1 0 | 1 1 0 | 1 1 0 | 1 1 0 | 1 1 0 | 1 1 0 | 1 1 0 |
| 0 0 0 | 0 0 1 | 0 1 0 | 0 1 1 | 1 0 0 | 1 0 1 | 1 1 0 | 1 1 1 |
| 0 | 0 | 0 | 1 | 2 | 0 | 3 | 3 |

| 312 | 313 | 314 | 315 | 316 | 317 | 318 | 319 |
|---|---|---|---|---|---|---|---|
| 1 0 0 | 1 0 0 | 1 0 0 | 1 0 0 | 1 0 0 | 1 0 0 | 1 0 0 | 1 0 0 |
| 1 1 1 | 1 1 1 | 1 1 1 | 1 1 1 | 1 1 1 | 1 1 1 | 1 1 1 | 1 1 1 |
| 0 0 0 | 0 0 1 | 0 1 0 | 0 1 1 | 1 0 0 | 1 0 1 | 1 1 0 | 1 1 1 |
| 1 | 0 | 0 | 2 | 1 | 1 | 2 | 3 |

# TABLE 6

| 320 | 321 | 322 | 323 | 324 | 325 | 326 | 327 |
|---|---|---|---|---|---|---|---|
| 1 0 1 | 1 0 1 | 1 0 1 | 1 0 1 | 1 0 1 | 1 0 1 | 1 0 1 | 1 0 1 |
| 0 0 0 | 0 0 0 | 0 0 0 | 0 0 0 | 0 0 0 | 0 0 0 | 0 0 0 | 0 0 0 |
| 0 0 0 | 0 0 1 | 0 1 0 | 0 1 1 | 1 0 0 | 1 0 1 | 1 1 0 | 1 1 1 |
| 2 | 1 | 0 | 0 | 1 | 0 | 0 | 0 |

| 328 | 329 | 330 | 331 | 332 | 333 | 334 | 335 |
|---|---|---|---|---|---|---|---|
| 1 0 1 | 1 0 1 | 1 0 1 | 1 0 1 | 1 0 1 | 1 0 1 | 1 0 1 | 1 0 1 |
| 0 0 1 | 0 0 1 | 0 0 1 | 0 0 1 | 0 0 1 | 0 0 1 | 0 0 1 | 0 0 1 |
| 0 0 0 | 0 0 1 | 0 1 0 | 0 1 1 | 1 0 0 | 1 0 1 | 1 1 0 | 1 1 1 |
| 1 | 1 | 0 | 0 | 0 | 0 | 0 | 0 |

| 336 | 337 | 338 | 339 | 340 | 341 | 342 | 343 |
|---|---|---|---|---|---|---|---|
| 1 0 1 | 1 0 1 | 1 0 1 | 1 0 1 | 1 0 1 | 1 0 1 | 1 0 1 | 1 0 1 |
| 0 1 0 | 0 1 0 | 0 1 0 | 0 1 0 | 0 1 0 | 0 1 0 | 0 1 0 | 0 1 0 |
| 0 0 0 | 0 0 1 | 0 1 0 | 0 1 1 | 1 0 0 | 1 0 1 | 1 1 0 | 1 1 1 |
| 1 | 0 | 0 | 0 | 0 | 0 | 0 | 0 |

| 344 | 345 | 346 | 347 | 348 | 349 | 350 | 351 |
|---|---|---|---|---|---|---|---|
| 1 0 1 | 1 0 1 | 1 0 1 | 1 0 1 | 1 0 1 | 1 0 1 | 1 0 1 | 1 0 1 |
| 0 1 1 | 0 1 1 | 0 1 1 | 0 1 1 | 0 1 1 | 0 1 1 | 0 1 1 | 0 1 1 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 1 |

| 352 | 353 | 354 | 355 | 356 | 357 | 358 | 359 |
|---|---|---|---|---|---|---|---|
| 1 0 1 | 1 0 1 | 1 0 1 | 1 0 1 | 1 0 1 | 1 0 1 | 1 0 1 | 1 0 1 |
| 1 0 0 | 1 0 0 | 1 0 0 | 1 0 0 | 1 0 0 | 1 0 0 | 1 0 0 | 1 0 0 |
| 0 0 0 | 0 0 1 | 0 1 0 | 0 1 1 | 1 0 0 | 1 0 1 | 1 1 0 | 1 1 1 |
| 1 | 0 | 0 | 0 | 1 | 0 | 0 | 0 |

| 360 | 361 | 362 | 363 | 364 | 365 | 366 | 367 |
|---|---|---|---|---|---|---|---|
| 1 0 1 | 1 0 1 | 1 0 1 | 1 0 1 | 1 0 1 | 1 0 1 | 1 0 1 | 1 0 1 |
| 1 0 1 | 1 0 1 | 1 0 1 | 1 0 1 | 1 0 1 | 1 0 1 | 1 0 1 | 1 0 1 |
| 0 0 0 | 0 0 1 | 0 1 0 | 0 1 1 | 1 0 0 | 1 0 1 | 1 1 0 | 1 1 1 |
| 1 | 0 | 0 | 0 | 0 | 1 | 0 | 1 |

| 368 | 369 | 370 | 371 | 372 | 373 | 374 | 375 |
|---|---|---|---|---|---|---|---|
| 1 0 1 | 1 0 1 | 1 0 1 | 1 0 1 | 1 0 1 | 1 0 1 | 1 0 1 | 1 0 1 |
| 1 1 0 | 1 1 0 | 1 1 0 | 1 1 0 | 1 1 0 | 1 1 0 | 1 1 0 | 1 1 0 |
| 0 0 0 | 0 0 1 | 0 1 0 | 0 1 1 | 1 0 0 | 1 0 1 | 1 1 0 | 1 1 1 |
| 0 | 0 | 0 | 0 | 0 | 0 | 0 | 1 |

| 376 | 377 | 378 | 379 | 380 | 381 | 382 | 383 |
|---|---|---|---|---|---|---|---|
| 1 0 1 | 1 0 1 | 1 0 1 | 1 0 1 | 1 0 1 | 1 0 1 | 1 0 1 | 1 0 1 |
| 1 1 1 | 1 1 1 | 1 1 1 | 1 1 1 | 1 1 1 | 1 1 1 | 1 1 1 | 1 1 1 |
| 0 0 0 | 0 0 1 | 0 1 0 | 0 1 1 | 1 0 0 | 1 0 1 | 1 1 0 | 1 1 1 |
| 2 | 1 | 0 | 2 | 1 | 1 | 2 | 3 |

# TABLE 7

```
  384       385       386       387       388       389       390       391
  1 1 0     1 1 0     1 1 0     1 1 0     1 1 0     1 1 0     1 1 0     1 1 0
  0 0 0     0 0 0     0 0 0     0 0 0     0 0 0     0 0 0     0 0 0     0 0 0
  0 0 0     0 0 1     0 1 0     0 1 1     1 0 0     1 0 1     1 1 0     1 1 1
    3         0         0         0         1         0         1         0

  392       393       394       395       396       397       398       399
  1 1 0     1 1 0     1 1 0     1 1 0     1 1 0     1 1 0     1 1 0     1 1 0
  0 0 1     0 0 1     0 0 1     0 0 1     0 0 1     0 0 1     0 0 1     0 0 1
  0 0 0     0 0 1     0 1 0     0 1 1     1 0 0     1 0 1     1 1 0     1 1 1
    0         0         0         0         0         0         0         0

  400       401       402       403       404       405       406       407
  1 1 0     1 1 0     1 1 0     1 1 0     1 1 0     1 1 0     1 1 0     1 1 0
  0 1 0     0 1 0     0 1 0     0 1 0     0 1 0     0 1 0     0 1 0     0 1 0
  0 0 0     0 0 1     0 1 0     0 1 1     1 0 0     1 0 1     1 1 0     1 1 1
    0         0         1         0         0         0         2         1

  408       409       410       411       412       413       414       415
  1 1 0     1 1 0     1 1 0     1 1 0     1 1 0     1 1 0     1 1 0     1 1 0
  0 1 1     0 1 1     0 1 1     0 1 1     0 1 1     0 1 1     0 1 1     0 1 1
  0 0 0     0 0 1     0 1 0     0 1 1     1 0 0     1 0 1     1 1 0     1 1 1
    0         1         0         2         0         0         0         2

  416       417       418       419       420       421       422       423
  1 1 0     1 1 0     1 1 0     1 1 0     1 1 0     1 1 0     1 1 0     1 1 0
  1 0 0     1 0 0     1 0 0     1 0 0     1 0 0     1 0 0     1 0 0     1 0 0
  0 0 0     0 0 1     0 1 0     0 1 1     1 0 0     1 0 1     1 1 0     1 1 1
    2         0         0         0         3         0         3         1

  424       425       426       427       428       429       430       431
  1 1 0     1 1 0     1 1 0     1 1 0     1 1 0     1 1 0     1 1 0     1 1 0
  1 0 1     1 0 1     1 0 1     1 0 1     1 0 1     1 0 1     1 0 1     1 0 1
  0 0 0     0 0 1     0 1 0     0 1 1     1 0 0     1 0 1     1 1 0     1 1 1
    0         0         0         0         1         0         2         2

  432       433       434       435       436       437       438       439
  1 1 0     1 1 0     1 1 0     1 1 0     1 1 0     1 1 0     1 1 0     1 1 0
  1 1 0     1 1 0     1 1 0     1 1 0     1 1 0     1 1 0     1 1 0     1 1 0
  0 0 0     0 0 1     0 1 0     0 1 1     1 0 0     1 0 1     1 1 0     1 1 1
    1         0         2         2         3         0         3         3

  440       441       442       443       444       445       446       447
  1 1 0     1 1 0     1 1 0     1 1 0     1 1 0     1 1 0     1 1 0     1 1 0
  1 1 1     1 1 1     1 1 1     1 1 1     1 1 1     1 1 1     1 1 1     1 1 1
  0 0 0     0 0 1     0 1 0     0 1 1     1 0 0     1 0 1     1 1 0     1 1 1
    2         2         3         3         2         2         3         3
```

TABLE 7

# TABLE 8

| 448 | 449 | 450 | 451 | 452 | 453 | 454 | 455 |
|---|---|---|---|---|---|---|---|
| 1 1 1<br>0 0 0<br>0 0 0<br>3 | 1 1 1<br>0 0 0<br>0 0 1<br>1 | 1 1 1<br>0 0 0<br>0 1 0<br>1 | 1 1 1<br>0 0 0<br>0 1 1<br>0 | 1 1 1<br>0 0 0<br>1 0 0<br>1 | 1 1 1<br>0 0 0<br>1 0 1<br>0 | 1 1 1<br>0 0 0<br>1 1 0<br>0 | 1 1 1<br>0 0 0<br>1 1 1<br>1 |

| 456 | 457 | 458 | 459 | 460 | 461 | 462 | 463 |
|---|---|---|---|---|---|---|---|
| 1 1 1<br>0 0 1<br>0 0 0<br>3 | 1 1 1<br>0 0 1<br>0 0 1<br>2 | 1 1 1<br>0 0 1<br>0 1 0<br>1 | 1 1 1<br>0 0 1<br>0 1 1<br>1 | 1 1 1<br>0 0 1<br>1 0 0<br>0 | 1 1 1<br>0 0 1<br>1 0 1<br>0 | 1 1 1<br>0 0 1<br>1 1 0<br>0 | 1 1 1<br>0 0 1<br>1 1 1<br>1 |

| 464 | 465 | 466 | 467 | 468 | 469 | 470 | 471 |
|---|---|---|---|---|---|---|---|
| 1 1 1<br>0 1 0<br>0 0 0<br>2 | 1 1 1<br>0 1 0<br>0 0 1<br>0 | 1 1 1<br>0 1 0<br>0 1 0<br>1 | 1 1 1<br>0 1 0<br>0 1 1<br>1 | 1 1 1<br>0 1 0<br>1 0 0<br>0 | 1 1 1<br>0 1 0<br>1 0 1<br>0 | 1 1 1<br>0 1 0<br>1 1 0<br>1 | 1 1 1<br>0 1 0<br>1 1 1<br>1 |

| 472 | 473 | 474 | 475 | 476 | 477 | 478 | 479 |
|---|---|---|---|---|---|---|---|
| 1 1 1<br>0 1 1<br>0 0 0<br>3 | 1 1 1<br>0 1 1<br>0 0 1<br>3 | 1 1 1<br>0 1 1<br>0 1 0<br>2 | 1 1 1<br>0 1 1<br>0 1 1<br>3 | 1 1 1<br>0 1 1<br>1 0 0<br>0 | 1 1 1<br>0 1 1<br>1 0 1<br>1 | 1 1 1<br>0 1 1<br>1 1 0<br>2 | 1 1 1<br>0 1 1<br>1 1 1<br>3 |

| 480 | 481 | 482 | 483 | 484 | 485 | 486 | 487 |
|---|---|---|---|---|---|---|---|
| 1 1 1<br>1 0 0<br>0 0 0<br>3 | 1 1 1<br>1 0 0<br>0 0 1<br>0 | 1 1 1<br>1 0 0<br>0 1 0<br>1 | 1 1 1<br>1 0 0<br>0 1 1<br>0 | 1 1 1<br>1 0 0<br>1 0 0<br>2 | 1 1 1<br>1 0 0<br>1 0 1<br>0 | 1 1 1<br>1 0 0<br>1 1 0<br>1 | 1 1 1<br>1 0 0<br>1 1 1<br>1 |

| 488 | 489 | 490 | 491 | 492 | 493 | 494 | 495 |
|---|---|---|---|---|---|---|---|
| 1 1 1<br>1 0 1<br>0 0 0<br>3 | 1 1 1<br>1 0 1<br>0 0 1<br>1 | 1 1 1<br>1 0 1<br>0 1 0<br>2 | 1 1 1<br>1 0 1<br>0 1 1<br>2 | 1 1 1<br>1 0 1<br>1 0 0<br>1 | 1 1 1<br>1 0 1<br>1 0 1<br>1 | 1 1 1<br>1 0 1<br>1 1 0<br>2 | 1 1 1<br>1 0 1<br>1 1 1<br>3 |

| 496 | 497 | 498 | 499 | 500 | 501 | 502 | 503 |
|---|---|---|---|---|---|---|---|
| 1 1 1<br>1 1 0<br>0 0 0<br>3 | 1 1 1<br>1 1 0<br>0 0 1<br>0 | 1 1 1<br>1 1 0<br>0 1 0<br>2 | 1 1 1<br>1 1 0<br>0 1 1<br>2 | 1 1 1<br>1 1 0<br>1 0 0<br>3 | 1 1 1<br>1 1 0<br>1 0 1<br>1 | 1 1 1<br>1 1 0<br>1 1 0<br>3 | 1 1 1<br>1 1 0<br>1 1 1<br>3 |

| 504 | 505 | 506 | 507 | 508 | 509 | 510 | 511 |
|---|---|---|---|---|---|---|---|
| 1 1 1<br>1 1 1<br>0 0 0<br>3 | 1 1 1<br>1 1 1<br>0 0 1<br>3 | 1 1 1<br>1 1 1<br>0 1 0<br>3 | 1 1 1<br>1 1 1<br>0 1 1<br>3 | 1 1 1<br>1 1 1<br>1 0 0<br>3 | 1 1 1<br>1 1 1<br>1 0 1<br>3 | 1 1 1<br>1 1 1<br>1 1 0<br>3 | 1 1 1<br>1 1 1<br>1 1 1<br>3 |

Further, the printing mode setting signal, a control signal from the CPU 1, iis input into the judgement ROM 49. With this signal, the judgement level can be changed and the judgement result of multivalence pictures, binary pictures, etc. can be forcibly output irrespective of the type of original picture.

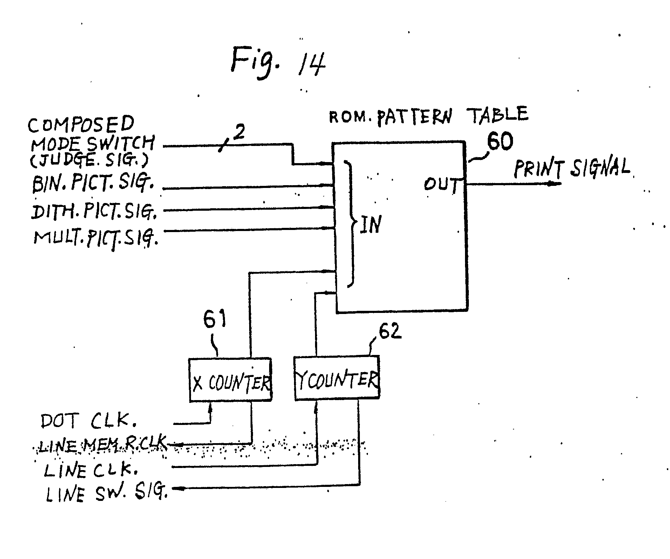

In addition, the present invention is not limited to the said embodiment, but it is also possible to substitute ROM pattern table 60, as shown in Fig. 14 for the multivalence, binary and dither switching circuit 11 and the binary and dither picture concentration generation circuit 12 in Fig. 5. An X counter 61 and a Y counter 62 generate the address data both in the X direction and in the Y direction. Signals for multivalence picture printing from these and the multivalence picture signal from the multivalence concentration pattern generation circuit 6, binary picture signals and dither picture signals from the dither/binary application circuit 8 and judgement signals from the picture type judgement circuit 10 are given to the ROM pattern table 60 as address inputs. In addition, it is also possible to combine the multivalence concentration pattern generation circuit 6 and picture type judgement circuit 10 into the ROM pattern table 60.

Further, binary picture signals may be used the detection of edge section as to multivalence picture signals, detection of thin lines, characters, etc. in the said embodiment the printing of multivalence pictures is divided by the multivalence concentration pattern method employing Figs. 3 and 4. that is to say, the concentration level range of multivalence picture signals is divided into

part concentration areas, fixed patterns are selected
according to the existence of multivalence picture signals
in which part concentration areas, and the printing energy
given to dots to constitute selected fixed patterns was
carried out by the method to modulate according to the
concentration level of multivalence picture signals. It is
also effective in case  the fixed concentration pattern
method as shown in Fig. 2, that is to say, the concentration
pattern method employing corresponding patterns one by one
at the gradation level of multivalence pictures as fixed
patterns was employed.

In case of the fixed concentration pattern method, since
the printing energy of each dot only takes the binary value,
the binary and dither picture concentration generation
circuit 12 in Fig.5 becomes  unnecessary.

Further, a dither matrix may be converted to a
multivalence concentration pattern, and in that case the
quality of the picture is maintained whether the switching
in the multivalence, binary and dither switching circuit 11
is carried out dot by dot, picture element by picture
element or in larger units.

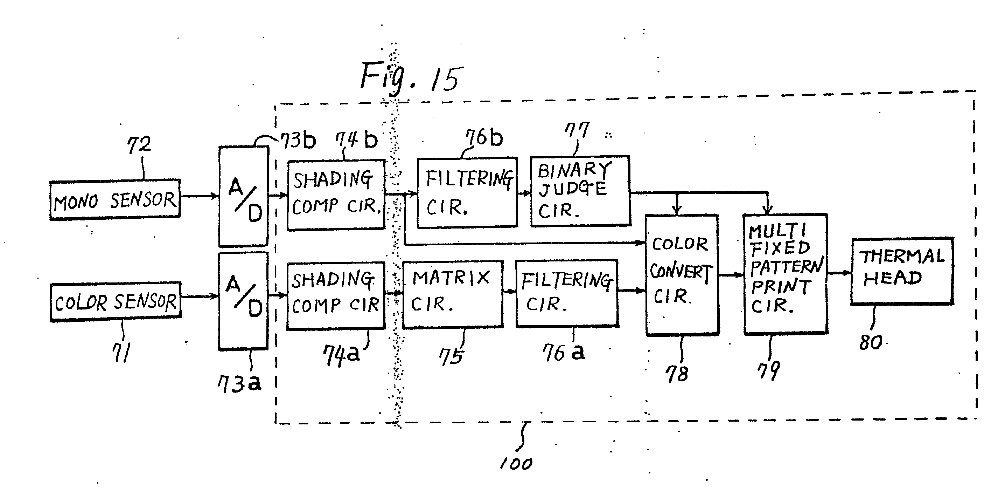

When color pictures are read by the  picture reader 2, a
judgement must be carried out on the basis of picture
signals by a monochrome image sensor and a color image
sensor (high resolution) in the picture reader.As shown in
Fig. 15, a color line image sensor 71 having low resolution
and a monochrome (black and white) image sensor 72 having
high resolution form the as color picture reader.  The
resolution of the color image sensor 71 is determined by the
matrix size of the picture printing apparatus including the thermal head 80. The color picture signals read by this color image sensor 71 are input into the picture processing means 100 after having been converted to multivalence digital signals (for example, expressed in eight bits) by an A/D converter 73a.

In the picture processing means 100, first the illumination unevenness on the copy surface and sensitivity unevenness of the color image sensor 71 are corrected by a shading correction circuit 74a. A matrix circuit 75 is a circuit to compensate for the hue, concentration, etc. A filtering circuit 76a is a circuit with low-pass characteristics to eliminate high-pass components unnecessary for the color picture printing and to smooth half tone pictures.

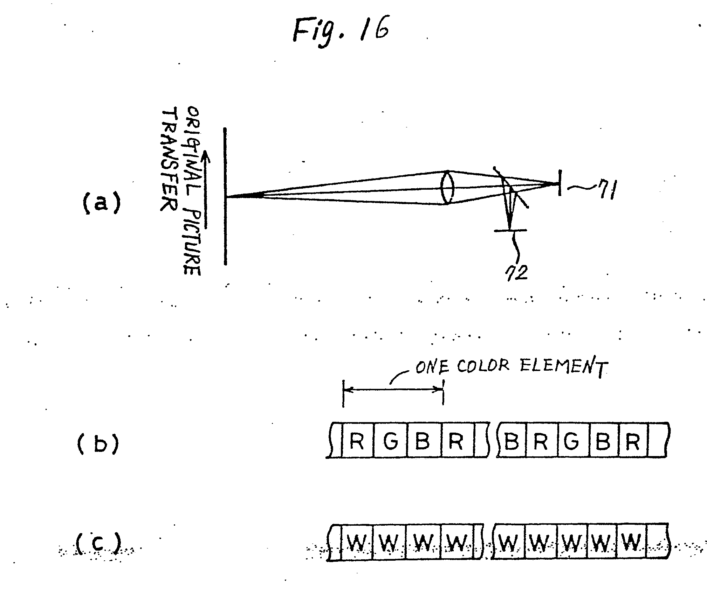

The monochrome image sensor 72 having high resolution has been installed in the layout as shown in Fig. 16(a) to read the same line as the color image sensor 71. The resolution ratio between this monochrome image sensor 72 and the color image sensor 71 of low resolution is 1 : 3. Thus, if the number of dots of the monochrome image sensor is the same as the total number of dots of the color image sensor 71,the resolution of the monochrome image sensor is three times higher than the resolution of the color image sensor 71. This is because the color image sensor 71 is required to read portions of three colors from same number of dots.

Monochrome picture signals read by the monochrome image sensor 72 of high resolution are corrected by the shading correction circuit 74b through the A/D converter 73b, similarly to color picture signals from the color image sensor 71, and are input to the filtering circuit 76b. The filtering circuit 76b has a high-pass characteristic
different from the  filtering circuit 76a, and passes sharp
variations of input picture signals. The output of this
filtering circuit 76b is utilized in the binary judgement
circuit 77 in the next stage as an edge detection signal for
binary pictures.  The binary judgement circuit 77 determines
which portions of a picture are multivalenct and which
portions are binary from the output of the filtering circuit
76b, and generates a switching signal for
multivalence/binary printing.

A color conversion circuit 78 converts three-color (for
example, R, G and B) picture signals read by the color image
sensor 71 to the four colors of yellow, magenta, cyan and
black necessary for the thermal copy printing. Also, the
circuit 78 determines the binary picture concentration and
color determination in the areas judged as binary.

The multivalence pattern printing circuit 79 converts
the data of multivalence picture signals to multivalence
patterns of N x M. The circuit 79 also converts the
multivalence patterns to corresponding printing pulse
widths. The pulse widths correspond to values of printing
energy. The thermal head in the color picture printing means
is driven in response to this pulse width, and carries out
the thermal copy printing.

Further, this multivalence  pattern printing circuit 79
is used for printing mixed multivalence/binary  pictures.
The circuit 79 divides the concentration level range of
multivalence picture signals into partial concentration
areas, for example, low-concentration area, medium-
concentration area and high-concentration area, employs three fixed patterns "A" to "C" in correspondence with these
partial concentration areas, and modulates the printing
energy for each dot composing the fixed patterns "A" to "C"
according to the concentration level of the multivalence
picture signals.

In the case of binary pictures, the printing energy for
each dot is individually modulated according to the binary
picture signal.

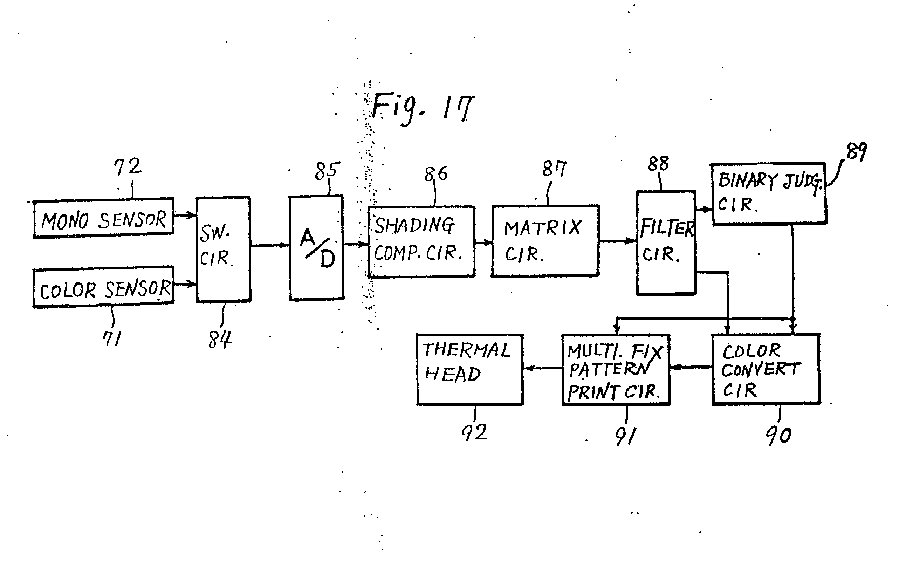

Thus, in this embodiment the color picture processing
system and monochrome picture processing system were
separate. As shown in Fig. 17, it is also possible to
combine these two processing systems in a color copying
machine. In Fig. 17 a switching circuit 84 switches and
outputs the output of the color image sensor and the output
of the monochrome image sensor 72. An A/D converter 85, a
shading correction circuit 86, a matrix circuit 87 and a
filtering circuit 88 are  commonly employed both for color
picture processing and monochrome picture processing.

Further, in this embodiment one dimensional image
sensors  71 and 72 were utilized. However, a two dimensional
image sensor may be substituted.

Further, in this embodiment it was judged whether images
were multivalent or binary, and color picture signals were
generated on the basis of that judgment. However, for
example, edge detection of pictures may be carried out on
the basis of picture signals from the monochrome image
sensor, while color picture signals to generate an image
with monochrome-generated edge emphasis treatment. In above-
mentioned embodiment shown in Figs.16 and 17, the results of
judgement are only binary or multivalent, because unjustiable picture is provided the dither method described in Fig. 5.

Claims:

1.      A picture printing apparatus for reproducing an original image comprising

means for detecting the picture signal from each of a plurality of individual areas on the original image, each area being divided into a plurality of dot segments;

means for generating a multivalence concentration pattern including a variable dot value corresponding to each dot segment of the original image in response to the detecting means;

means responsive to the detecting means for generating a binary pattern including one of two fixed dot values corresponding to each dot segment of the original image;

means for selecting the dot value from one of the binary and multivalence patterns corresponding to each individual dot segment to be printed; and

means for printing dots in the dot segments corresponding to the selected dot values in response to the selecting means for reproducing the original image.

2.      The apparatus of claim 1, also including means for generating a dither pattern including one of a plurality of fixed threshold dot values corresponding to each dot segment of the original image, and wherein the selecting means includes means for alternatively selecting the threshold dot value from the dither pattern corresponding to predetermined individual dots to be printed.

3.      A picture printing apparatus for reproducing an original color image based comprising

means for detecting the picture signal from each of a plurality of individual areas on the original image, each area being divided into a plurality of dot segments, including a high resolution sensor and a low resolution sensor;

means for generating a multivalence concentration pattern including a variable dot value corresponding to each dot segment of the original image in response to the low resolution sensor;

means  responsive to the low resolution sensor for generating a binary pattern including one of two fixed dot values corresponding to each dot segment of the original image;

means responsive to the high resolution sensor for selecting the dot value from one of the binary and multivalence patterns corresponding to each individual dot segment to be printed; and

means for printing dots in the dot segments corresponding to the selected dot values in response to the selecting means.

## Fig. 1  PRIOR ART

| 10 | 9  | 8  | 7  |
|----|----|----|----|
| 11 | 2  | 1  | 6  |
| 12 | 3  | 4  | 5  |
| 13 | 14 | 15 | 16 |

## Fig. 2  PRIOR ART

「2」　「3」　「4」　「5」　「6」　「7」　「8」

「10」　「11」　「12」　「13」　「14」　「15」　「16」

0248616

Fig.3 PRIOR ART

Fig.4 PRIOR ART

| GRADATION LEVELS | MULTIVALENCE PATTERNS |
|---|---|
| 0 ~ 6 | |
| 7 ~ 18 | |
| 19 ~ 30 | |

Fig. 5

Fig. 6　　　0248616

(a)

(b)

(c)

(d)

A: MULTIVALENCE PICTURE
B: INDEFINITE (DITHER)
C: BINARY PICTURE

(e)

(f)

# Fig. 7

| Signal | Waveform |
|---|---|
| DOT CLOCK | |
| MULTIVALENCE PICTURE SIGNAL | |
| BINARY PICTURE SIGNAL | |
| DITHER PICTURE SIGNAL | |
| MULTIVALENCE PRINTING SIGNAL | 6  0  3  6  2  4  6  4 |
| PRINTING OUT SIGNAL 1 | 6  ⑤  3  6  ⑤  4  6  ⑤  4 |
| PRINTING OUT SIGNAL 2 | 6  ⑤  3  6  2  4  6  4 |

## Fig. 8

FROM FRAME MEMORY 3 → **31** DITHER MATRIX TABLE ROM. → **1** DITHER PICTURE SIGNAL

**32** MATRIX POSITION COUNTER

SUB-SCAN CLOCK

MAIN-SCAN CLOCK

**33** COMPARATOR → **1** BINARY PICTURE SIGNAL

**34** BINARY SET CIR.

Fig. 9

## Fig. 10

(a)

0                                                                    5II

(b)

0                                                                    5II

## Fig. 11

| i11 | i12 | i13 |
|-----|-----|-----|
| i21 | i22 | i23 |
| i31 | i32 | i33 |

## Fig. 12

(a)   (b)   (c)

## Fig. 13

(a)   (b)   (c)

# Fig. 14

COMPOSED
MODE SWITCH
(JUDGE. SIG.) —— 2

BIN. PICT. SIG. ———

DITH. PICT. SIG. ———

MULT. PICT. SIG. ———

ROM. PATTERN TABLE

60

IN — OUT — PRINT SIGNAL

61 — X COUNTER

62 — Y COUNTER

DOT CLK.

LINE MEM. R. CLK.

LINE CLK.

LINE SW. SIG.

# Fig. 15

## Fig. 16

(a)

ORIGINAL PICTURE
TRANSFER

~71

72

(b)

ONE COLOR ELEMENT

| R | G | B | R | | B | R | G | B | R |

(c)

| W | W | W | W | | W | W | W | W | W |

Fig. 17

MONO SENSOR (72) → SW. CIR. (84)
COLOR SENSOR (71) → SW. CIR. (84)
SW. CIR. → A/D (85) → SHADING COMP. CIR. (86) → MATRIX CIR. (87) → FILTER CIR. (88) → BINARY JUDG. CIR. (89)

THERMAL HEAD (92) ← MULTI. FIX PATTERN PRINT CIR. (91) ← COLOR CONVERT CIR (90)